# EUROPÄISCHE PATENTSCHRIFT

(11) **EP 0 362 120 B1**
(45) Veröffentlichungstag und Bekanntmachung des Hinweises auf die Patenterteilung: **18.11.1993**
(21) Anmeldenummer: 89710070.7
(22) Anmeldetag: 08.09.1989
(51) Int. Cl.: B65G 53/40

(54) **Verfahren und Vorrichtung zur kontinuierlichen Schüttgutaufgabe in eine pneumatische Förderanlage**
Method and device for continously feeding bulk material to a pneumatic transporting installation
Procédé et dispositif pour la distribution continue des matières en vrac dans une installation de transport pneumatique

(30) Priorität: 08.09.1988 DE 3830544
(43) Veröffentlichungstag der Anmeldung: 04.04.1990
(73) Patentinhaber: KBI KLÖCKNER-BECORIT INDUSTRIETECHNIK GMBH, 46569 Hünxe (DE)
(72) Erfinder: Kolodziej, Franz, D-6806 Viernheim (DE); Stegner, Mathias, D-6806 Viernheim (DE)
(74) Vertreter: Katscher, Helmut, Dipl.-Ing.

(56) Entgegenhaltungen:
- DE-A- 1 903 539
- DE-A- 3 145 017
- DE-A- 3 310 452

## Beschreibung

Die Erfindung betrifft ein verfahren zur kontinuierlichen Schüttgutaufgabe in eine pneumatische Förderanlage, bei dem das Schüttgut aus einem Auslaß eines ständig druckbeaufschlagten, geschlossenen Senderbehälters kontinuierlich an eine pneumatische Förderleitung abgegeben wird, wobei das Schüttgut dem Senderbehälter im wesentlichen unter Aufrechterhaltung des Sender-Innendrucks zugeführt wird, wobei die Zuführung des Schüttguts in den Senderbehälter chargenweise aus einem vorgeschalteten Einschleusbehälter erfolgt und während der Zuführung des Schüttguts an den Senderbehälter der Einschleusbehälter nach außen geschlossen ist und auf einem Innendruck gehalten wird, der über dem Innendruck des Senderbehälters liegt, und wobei der Senderbehälter in den übrigen Zeitabschnitten gegenüber dem Einschleusbehälter verschlossen ist.

Es ist bekannt, das zu transportierende Schüttgut in pneumatische Förderanlagen mittels Zellradschleusen kontinuierlich einzugeben, so daß eine Unterbrechung der Förderung vermieden wird. Zellradschleusen sind jedoch störanfällig und unterliegen einem hohen verschleiß. Ein hoher Druckaufbau ist nicht möglich. Da die Beschickung mittels einer Zellradschleuse nicht vollständig kontinuierlich ist, da nacheinander einzelne Chargen zugegeben werden, ist es auch bekannt, die Zugabe kontinuierlich durch einen Schneckenförderer auszuführen. In beiden Fällen kann das Schüttgut aus einem offenen, nicht druckbeaufschlagten Behälter abgezogen werden, der daher auch unbehindert gefüllt werden kann.

Da das Schüttgut gegen in der Förderleitung herrschenden Druck zugeführt werden muß, wird der Schüttgutstrom in der Beschickungseinrichtung durch das entgegengesetzt gerichtete Druckgefälle beeinträchtigt. Der Beschickungsvorgang verläuft wesentlich günstiger, wenn ein abgeschlossener druckbeaufschlagter Senderbehälter verwendet wird (DE-B-25 33 070).

Bei einem bekannten Verfahren (DE-B-1 081 825) erfolgt eine kontinuierliche Beschickung des Senderbehälters mit Schüttgut durch einen Schneckenförderer, der einen offenen Einfülltrichter aufweist. Dieser Schneckenförderer bewirkt zwar im wesentlichen eine Aufrechterhaltung eines jedoch nur begrenzten Innendrucks im Senderbehälter. Da das Druckgefälle jedoch der Zuführung des Schüttguts entgegenwirkt, wird diese Zuführung nachteilig beeinflußt und kann bei schwierig zu handhabenden Schüttgütern sogar unterbrochen werden.

Bei einer bekannten Vorrichtung (DE-A-19 03 539) zur kontinuierlichen Schüttgutaufgabe, die nach dem Verfahren der eingangs genannten Gattung arbeitet, ist der Auslaß des Senderbehälters unmittelbar, d.h. ohne Verschluß- oder Dosiereinrichtung, an die pneumatische Förderleitung angeschlossen. Eine Dosierung der Schüttgutaufgabe ist hierbei nicht oder nur unzureichend durch Verstellung des Auslaßkegels am Einschleusbehälter möglich.

Eine kontinuierliche Schüttgutaufgabe wird dadurch erschwert oder verhindert, daß das Schüttgut gegen den im Einschleusbehälter anstehenden Druck zugeführt werden muß, wodurch die Schüttgutzufuhr verzögert wird. Diese Schwierigkeiten bestehen auch bei einer anderen bekannten Vorrichtung (DE-A-31 45 017), bei der ein Kegelverschluß am Auslaß eines Senderbehälters einer pneumatischen Förderanlage intermittierend geöffnet und geschlossen wird. Eine Dosierung erfolgt hierbei über die Abstimmung der Öffnungs- und Schließzeiten. Die Schüttgutaufgabe erfolgt propfenförmig und nicht kontinuierlich.

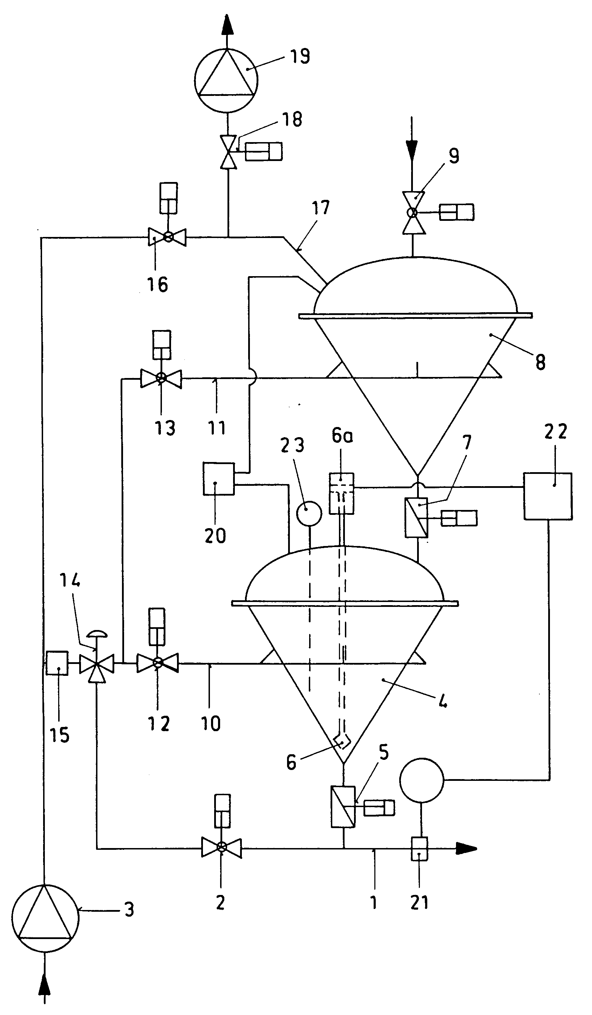

Vorrichtungen zur Schüttgutaufgabe an eine pneumatische Förderleitung mit einem Einschleusbehälter und einem Senderbehälter mit einer nicht näher beschriebenen Servosteuerung am Auslaß des Senderbehälters sind aus dem Aufsatz Trenkler, "Pneumatische Förderung von Asche" (Abb. 13), Zeitschrift "Braunkohle", Heft 2, Februar 1960, S. 59-65 bekannt.

Aufgabe der Erfindung ist es daher, ein Verfahren der eingangs genannten Gattung so auszubilden, daß bei kontinuierlicher, dosierter Schüttgutaufgabe an die pneumatische Förderleitung eine unbehinderte Beschickung des Einschleusbehälters und des Senderbehälters ermöglicht wird.

Diese Aufgabe wird erfindungsgemäß dadurch gelöst, daß ein Dosierkörper am Auslaß des Senderbehälters kontinuierliche Hubbewegungen ausführt und daß der Einschleusbehälter mit einem Sauger verbindbar ist.

Während das Schüttgut aus dem Einschleusbehälter in den Senderbehälter fließt, behindern die Druckverhältnisse diesen Schüttgutstrom nicht, weil der Innendruck im Einschleusbehälter etwas höher als der Innendruck im Senderbehälter ist. In dieser Zeit ist der Einschleusbehälter nach außen abgeschlossen. Sobald der Einschleusbehälter entleert ist, wird die Verbindung zum Senderbehälter verschlossen, und der Einschleusbehälter, der durch den Sauger entlüftet wird und somit keinen Überdruck mehr aufweist, kann nach außen geöffnet und mit Schuttgut gefüllt werden. Während dieser in einzelnen Chargen erfolgenden Befüllung des Einschleusbehälters bleibt die kontinuierliche Schüttgutaufgabe aus dem Senderbehälter an die Förderanlage erhalten.

Erst mit dem Sauger wird es möglich, einen Unterdruck im Einschleusbehälter zu erzeugen, so daß das Fördergut schnell zugeführt (eingesaugt) werden kann. Erst die Verwendung eines Saugers macht es möglich, ein Filter zu verwenden, das den Austritt von Staub aus dem Einschleusbehälter verhindert, weil nur durch die Verwendung eines motorisch angetriebenen Saugers der durch ein solches Filter verursachte Strömungswiderstand überwunden werden kann.

Die an sich sehr vorteilhafte Dosierwirkung eines gesteuerte kontinuierliche Hubbewegungen ausführenden Dosierkörpers am Auslaß des Senderbehälters setzt voraus, daß das Nachfüllen des Senderbehälters in verhältnismäßig kurzen Zeitabständen erfolgt, da sich anderenfalls die Füllungsverhältnisse im Senderbehälter zwischen zwei Füllvorgängen zu stark ändern würden. Der jeweilige Füllungszustand des Senderbehälters beeinflußt aber die Dosierwirkung durch den höhenbeweglichen Dosierkörper. Daraus ergibt sich die Notwendigkeit, den Einschleusbehälter in verhältnismäßig rascher Folge in den Senderbehälter zu entleeren; dies wiederum macht es erforderlich, den Einschleusbehälter selbst in rascher Folge zu füllen. Dies ist aber nur möglich durch die Saugwirkung des an den Einschleusbehälter angeschlossenen Saugers.

Die Erfindung betrifft auch eine vorteilhafte Vorrichtung zur Durchführung des Verfahrens. Ausgehend von einer Vorrichtung mit einem geschlossenen Senderbehälter, dessen Auslaß an eine pneumatische Förderleitung angeschlossen ist, mit einer an den Senderbehälter angeschlossenen Druckquelle und mit einer in den Senderbehälter mündenden Beschickungseinrichtung, wobei die Beschickungseinrichtung ein nach außen und zum Senderbehälter verschließbarer Einschleusbehälter ist, der mit einer Druckquelle verbindbar ist, ist die erfindungsgemäße Vorrichtung dadurch gekennzeichnet, daß ein am Auslaß des Senderbehälters angeordneter Dosierkörper durch eine Hubeinrichtung zu kontinuierlichen, steuerbaren Hubbewegungen antreibbar ist, daß der Einschleusbehälter wahlweise an eine Druckquelle und an eine Entlüftungsleitung anschließbar ist und daß in der Entlüftungsleitung ein Sauger angeordnet ist.

Vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist.

Die Zeichnung zeigt in schematischer Darstellungsweise eine Vorrichtung zur kontinuierlichen Schüttgutaufgabe in eine pneumatische Förderanlage. Die Förderanlage weist eine Förderleitung 1 auf, die über ein Förderluftventil 2 an eine Druckquelle 3 angeschlossen ist. Ein geschlossener Senderbehälter 4 ist über ein Ventil 5 an die Förderleitung 1 angeschlossen. Im Auslaß des Senderbehälters 4 befindet sich ein Dosierkörper 6, der von einer Hubeinrichtung 6a zu kontinuierlichen, steuerbaren Hubbewegungen antreibbar ist.

In den Senderbehälter 4 mündet über ein Absperrelement, beispielsweise ein Ventil 7, der Auslaß eines Einschleusbehälters 8, der im wesentlichen ähnlich wie der Senderbehälter 4 aufgebaut ist. Die Beschickung des Einschleusbehälters 8 erfolgt über einen absperrbaren Einlaß 9.

Der Senderbehälter 4 und der Einschleusbehälter 8 sind jeweils mit Oberluftleitungen 10 bzw. 11 versehen, die jeweils über ein Ventil 12 bzw. 13 über ein gemeinsames Dreiwegeventil 14 und ein Druckminderventil 15 mit der Druckquelle 3 verbunden sind. Die Druckquelle 3 ist unmittelbar über ein Ventil 16 mit einer Aufpumpleitung 17 verbunden, die in den Einschleusbehälter 8 mündet. Die Aufpumpleitung 17 kann über ein Ventil 18 an einen Sauger 19, beispielsweise ein Sauggebläse angeschlossen werden.

Ein gemeinsamer Differenzdruckschalter 20 ist an den Senderbehälter 4 und den Einschleusbehälter 8 angeschlossen. In der Förderleitung 1 ist eine kapazitive Förderstrom-Meßeinrichtung 21 angeordnet, die mit einer Steuereinrichtung 22 für die Hubeinrichtung 16 des Dosierkörpers 5 verbunden ist. Im Senderbehälter 4 ist ein Füllstandsgeber 23 angeordnet.

Zum Füllen der Vorrichtung wird die Auslaufklappe bzw. das Auslaufventil 7 des Einschleusbehälters 8 geschlossen. Das Förderluftventil 2 wird geöffnet. Das Entlüftungsventil 18 ist bei eingeschaltetem Sauger 19 geöffnet. Dann wird das Einlaßventil 9 für den Einschleusbehälter 8 geöffnet; der Einschleusbehälter 8 wird mit Füllgut bis zu einem vorgegebenen Füllstand gefüllt. Das Einlaßventil 9 und das Entlüftungsventil 18 werden geschlossen und der Sauger 19 wird ausgeschaltet.

Durch Öffnen des Aufpumpventils 16 wird der Einschleusbehälter 8 aufgepumpt, bis der Differenzdruckschalter 20 im Einschleusbehälter 8 einen um etwa 0,2 bar höheren Innendruck als im Senderbehälter 4 feststellt. Dabei ist das Oberluftventil 12 für den Senderbehälter 4 geöffnet. Die Auslaufklappe oder das Auslaufventil 7 wird geöffnet, so daß das Schüttgut in den Senderbehälter 4 gelangt. Das Auslaßventil 5 des Senderbehälters 4 wird geöffnet und die Hubeinrichtung 6a für den Dosierkörper 6 wird eingeschaltet. Das Aufpumpventil 16 des Einschleusbehälters 8 wird geschlossen und das Oberluftventil 13 wird geöffnet. Sobald der Füllstandsmelder 23 einen vorgegebenen Füllstand anzeigt, wird das Auslaßventil 7 geschlossen.

Während die kontinuierliche Schüttgutaufgabe aus dem Senderbehälter 4 an die Förderleitung 1 erfolgt, wird der Einschleusbehälter 8 erneut gefüllt. Hierzu wird das Oberluftventil 13 geschlossen und das Entlüftungsventil 18 geöffnet und der Sauger 19 eingeschaltelt, bis ein vorgegebener Unterdruck erreicht ist. Sodann erfolgt in der schon beschriebenen Weise das Füllen des Einschleusbehälters 8, an das sich ein erneuter Beschickungsvorgang des Senderbehälters 4 anschließt. Während dieser chargenweisen Beschickung des Senderbehälters 4 gibt dieser einen kontinuierlichen Schüttgut-Förderstrom an die Förderleitung 1 ab.

## Patentansprüche

1. Verfahren zur kontinuierlichen Schüttgutaufgabe in eine pneumatische Förderanlage, bei dem das Schüttgut aus einem Auslaß eines ständig druckbeaufschlagten, geschlossenen Senderbehälters (4) kontinuierlich an eine pneumatische Förderleitung (1) abgegeben wird, wobei das Schüttgut dem Senderbehälter (4) im wesentlichen unter Aufrechterhaltung des Sender-Innendrucks zugeführt wird, wobei die Zuführung des Schüttguts in den Senderbehälter (4) chargenweise aus einem vorgeschalteten Einschleusbehälter (8) erfolgt und während der Zuführung des Schüttguts an den Senderbehälter (4) der Einschleusbehälter (8) nach außen geschlossen ist und auf einem Innendruck gehalten wird, der über dem Innendruck des Senderbehälters (4) liegt, und wobei der Senderbehälter (4) in den übrigen Zeitabschnitten gegenüber dem Einschleusbehälter (8) verschlossen ist, dadurch gekennzeichnet, daß ein Dosierkörper (6) am Auslaß des Senderbehälters (4) kontinuierliche Hubbewegungen ausführt und daß der Einschleusbehälter (8) mit einem Sauger (19) verbindbar ist.

2. Verfahren nach Anspruch 1, dadurch gekennzeichnet, daß der Innendruck im Einschleusbehälter (8) etwa 0,2 bar höher als im Senderbehälter (4) gewählt wird.

3. Verfahren nach Anspruch 1, dadurch gekennzeichnet, daß die Größe und/oder die Frequenz des Hubes des Dosierkörpers (6) im Senderbehälter (4) in Abhängigkeit vom Druck oder vom Förderstrom in der pneumatischen Förderleitung (1) gesteuert wird.

4. Vorrichtung zur Durchführung des Verfahrens nach einem der Ansprüche 1-3, mit einem geschlossenen Senderbehälter (4), dessen Auslaß an eine pneumatische Förderleitung (1) angeschlossen ist, mit einer an den Senderbehälter (4) angeschlossenen Druckquelle (3) und mit einer in den Senderbehälter (4) mündenden Beschickungseinrichtung, wobei die Beschickungseinrichtung ein nach außen und zum Senderbehälter (4) verschließbarer Einschleusbehälter (8) ist, der mit einer Druckquelle (3) verbindbar ist, dadurch gekennzeichnet, daß ein am Auslaß des Senderbehälters (4) angeordneter Dosierkörper (6) durch eine Hubeinrichtung (6a) zu kontinuierlichen, steuerbaren Hubbewegungen antreibbar ist, daß der Einschleusbehälter (8) wahlweise an eine Druckquelle (3) und an eine Entlüftungsleitung (18, 19) anschließbar ist und daß in der Entlüftungsleitung ein Sauger (19) angeordnet ist.

5. Vorrichtung nach Anspruch 4, dadurch gekennzeichnet, daß der Senderbehälter (5) und der Einschleusbehälter (8) mit einem gemeinsamen Differenzdruckschalter (20) verbunden sind.

6. Vorrichtung nach Anspruch 4, dadurch gekennzeichnet, daß der Senderbehälter (4) und der Einschleusbehälter (8) an eine gemeinsame Druckquelle (3) angeschlossen sind und daß mindestens in der von der Druckquelle (3) zum Senderbehälter (4) führenden Leitung ein Druckminderventil (15) angeordnet ist.

7. Vorrichtung nach Anspruch 6, dadurch gekennzeichnet, daß die gemeinsame Druckquelle (3) über ein Druckminderventil (15) an die pneumatische Förderleitung (1) als Förderdruckquelle angeschlossen ist.

8. Vorrichtung nach Anspruch 4, dadurch gekennzeichnet, daß in der pneumatischen Förderleitung (1) eine kapazitive Förderstrom-Meßeinrichtung (21) angeordnet ist, die die Hubeinrichtung (6a) für den Dosierkörper (6) steuert.

## Claims

1. Method for continuous feed of bulk material to a pneumatic transporting installation, in which the bulk material is continuously fed to a pneumatic transporting duct (1) from an outlet of a constantly pressurised, closed transmitter tank (4), the bulk material being fed to the transmitter tank (4) whilst essentially maintaining the internal pressure of the transmitter tank, in which the supply of the bulk material into the transmitter tank (4) takes place in batches from a charging tank (8) on the incoming circuit, and, during the supply of the bulk material to the transmitter tank (4), the charging tank (8) is closed outwards and is kept at an internal pressure which is above the internal pressure of the transmitter tank (4), and in which the transmitter tank (4) is sealed to the charging tank (8) at other periods, **characterised in that** a dosing device (6) at the outlet of the transmitter tank (4) makes continuous lifting movements, and that the charging tank (8) can be connected to a suction apparatus (19).

2. Method according to Claim 1, characterised in that the internal pressure in the charging tank (8) is selected to be about 0.2 bar higher than in the transmitter tank (4).

3. Method according to Claim 1, characterised in that the size and/or the frequency of the lifting stroke of the dosing device (6) in the transmitter tank (4) is controlled as a function of the pressure or of the transport flow in the pneumatic transporting duct (1).

4. Device for carrying out the method according to one of Claims 1-3, having a closed transmitter tank (4), the outlet of which is connected to a pneumatic transporting duct (1) with a pressure source (3) connected to the transmitter tank (4) and with a feeding mechanism opening into the transmitter tank (4), the feeding mechanism being a charging tank (8) which can be sealed outwards and to the transmitter tank (4), it being possible to connect the charging tank (8) to a pressure source (3), characterised in that a dosing device (6) located at the outlet of the transmitter tank (4) can be actuated by a lifting mechanism (6a) for continuous, controllable lifting movements, that the charging tank (8) can be connected optionally to a pressure source (3) and to a venting pipe (18, 19) and that a suction apparatus (19) is located in the venting pipe.

5. Device according to Claim 4, characterised in that the transmitter tank (5) and the charging tank (8) are connected to a common differential pressure switch (20).

6. Device according to Claim 4, characterised in that the transmitter tank (4) and the charging tank (8) are connected to a common pressure source (3) and that a pressure-reducing valve (15) is located at least in the pipe leading from the pressure source (3) to the transmitter tank (4).

7. Device according to Claim 6, characterised in that the common pressure source (3) is connected via a pressure-reducing valve (15) to the pneumatic transporting duct (1) as the source of the transporting pressure.

8. Device according to Claim 4, characterised in that a capacitive transport flow measurement device (21) which controls the lifting mechanism (6a) for the dosing device (6) is located in the pneumatic transporting duct (1).

## Revendications

1. Procédé de distribution en continu de matière en vrac dans une installation de transport pneumatique, dans lequel la matière en vrac est délivrée en continu de la sortie d'un réservoir d'alimentation (4) fermé soumis en permanence à une pression à une conduite de transport (1) pneumatique, la matière en vrac étant acheminée au réservoir d'alimentation (4) en substance par maintien de la pression interne d'alimentation, l'acheminement de la matière en vrac dans le réservoir d'alimentation (4) se faisant par charges à partir d'un réservoir d'éclusage (8) monté en amont et, au cours de l'acheminement de la matière en vrac au réservoir d'alimentation (4), le réservoir d'éclusage (8) est fermé vers l'extérieur et est maintenu sous une pression interne qui se situe au-dessus de la pression interne du réservoir d'alimentation (4), et le réservoir d'alimentation (4) est fermé vis-à-vis du réservoir d'éclusage (8) pendant les autres périodes de temps, caractérisé en ce qu'un corps de dosage (6) disposé à la sortie du réservoir d'alimentation (4) effectue des mouvements de levage continus et le réservoir d'éclusage (8) peut être raccordé à un système d'aspiration (19).

2. Procédé selon la revendication 1, caractérisé en ce que la pression interne dans le réservoir d'éclusage (8) est un peu supérieure à la pression interne dans le réservoir d'alimentation (4).

3. Procédé selon la revendication 1, caractérisé en ce que l'ordre de grandeur et/ou la fréquence du levage du corps de dosage (6) dans le réservoir d'alimentation (4) est commandé(e) en fonction de la pression ou du flux transporté dans la conduite de transport pneumatique (1).

4. Dispositif de réalisation du procédé selon l'une quelconque des revendications 1 à 3, comportant un réservoir d'alimentation (4) fermé, dont la sortie est raccordée à une conduite de transport (1) pneumatique, une source de pression (3) raccordée au réservoir d'alimentation (4) et un dispositif de chargement débouchant dans le réservoir d'alimentation (4), le dispositif de chargement étant constitué par un réservoir d'éclusage (8) qui peut être fermé vis-à-vis de l'extérieur et vis-à-vis du réservoir d'alimentation (4), lequel réservoir d'éclusage (8) peut être raccordé à une source de pression (3), caractérisé en ce qu'un corps de dosage (6) agencé à la sortie du réservoir d'alimentation (4) peut être actionné par un dispositif de levage (6a) pour effectuer des mouvements de levage continus commandables, le réservoir d'éclusage (8) peut être raccordé au choix à une source de pression (3) et à une conduite de purge (18, 19) et un système d'aspiration (19) est agencé dans la conduite de purge.

5. Dispositif selon la revendication 4, caractérisé en ce que le réservoir d'alimentation (5) et le réservoir d'éclusage (8) sont raccordés à un interrupteur de pression différentielle commun (20).

6. Dispositif selon la revendication 4, caractérisé en ce que le réservoir d'alimentation (4) et le réservoir d'éclusage (8) sont raccordés à une source de pression commune (3) et au moins dans la conduite menant de la source de pression (3) au réservoir d'alimentation (4) une vanne de détente (15) est agencée.

7. Dispositif selon la revendication 6, caractérisé en ce que la source de pression commune (3) est connectée à titre de source de pression de transport à la conduite de transport pneumatique (1) via une vanne de détente (15).

8. Dispositif selon la revendication 4, caractérisé en ce qu'on agence, dans la conduite de transport pneumatique (1), un dispositif de mesure du débit de transport capacitif (21) qui commande le dispositif de levage (6a) pour le corps de dosage (6).
